# EUROPÄISCHE PATENTSCHRIFT

(11) **EP 0 494 883 B1**
(45) Veröffentlichungstag und Bekanntmachung des Hinweises auf die Patenterteilung: **13.07.1994**
(21) Anmeldenummer: 90913792.9
(22) Anmeldetag: 01.10.1990
(51) Int. Cl.: G01J 3/26

(54) **VERFAHREN UND ANORDNUNG ZUR FABRY-PEROT-SPEKTROSKOPIE**
PROCESS AND DEVICE FOR FABRY-PEROT SPECTROSCOPY
PROCEDE ET AGENCEMENT POUR LA SPECTROSCOPIE FABRY-PEROT

(30) Priorität: 12.10.1989 DE 3934106
(43) Veröffentlichungstag der Anmeldung: 22.07.1992
(73) Patentinhaber: Hartmann & Braun Aktiengesellschaft, 60484 Frankfurt am Main (DE)
(72) Erfinder: ZÖCHBAUER, Michael, D-6370 Oberursel 1 (DE)
(74) Vertreter: Meissner, Peter E., Dipl.-Ing.
(86) Internationale Anmeldenummer: DE9000747
(87) Internationale Veröffentlichungsnummer: WO9105988

(56) Entgegenhaltungen:
- EP-A- 260 073
- US-A- 4 005 937
- US-A- 4 525 067
- N.T.I.S. Technical Notes NASA Tech. Brief, Oktober 1986, (Springfield, VA, US), G.K. Schwemmer : "Electro-optical tuning of Fabry-Perot interferometers", Seite 1069
- Japanese Journal of Applied Physics/Teil 1, Bd. 26, Nr. 6. Juni 1987, (Tokyo, JP), T. Hikita et al. : "A versatile spectrometer by the use of a pressure-scanned Fabry-Perot interferometer and a piezoelectrically-scanned Fabry-Perot interferometer in tandem arrangement", Seiten 936-940

## Beschreibung

Die Erfindung betrifft ein Verfahren zur Fabry-Perot-Spektroskopie mit einem Spektrometer gemäß dem Oberbegriff des Patentanspruches.

In der Prozeß- und Umweltmeßtechnik kommt den spektroskopischen Methoden zur Messung von Gasen und Flüssigkeiten große Bedeutung zu. Dementsprechend sind zahlreiche Meßverfahren entwickelt worden, von denen im vorliegenden Fall im Schwerpunkt die Verfahren betrachtet werden sollen, die sich für die Flüssigkeitsspektroskopie im Nahen Infraroten (ca. 1»m bis 3»m Wellenlänge) eignen.

Im folgenden soll auf einige bekannte Verfahren zur Flüssigkeitsspektroskopie und die nach diesen Verfahren arbeitenden Spektrometer näher eingegangen werden.

Das klassische Verfahren zur Flüssigkeitsspektroskopie im Nahen Infraroten ist die Zerlegung der Strahlung mit einem Gittermonochromator. Die Aufnahme des Strahlungsspektrums erfolgt hier üblicherweise durch Drehung des Dispersionsgitters, wobei ein relativ aufwendiger mechanischer Präzisionsantrieb erforderlich ist. Dies ist insbesondere dann störend, wenn die Messung in rauher industrieller Umgebung stattfindet. Bei derartigen Prozeßanwendungen ist man bestrebt, auf mechanisch bewegte Teile gänzlich zu verzichten und einfache robuste Anordnungen zu verwenden. Die marktverfügbaren Prozeßspektrometer dieses Typs sind der Preiskategorie "High-Performance" zuzurechnen. Für ein einfaches, robustes und preiswertes Spektrometer, das in rauher industrieller Umgebung betrieben werden soll, kommt das beschriebene Verfahren daher nicht in Betracht.

Ein weiteres Verfahren zur Flüssigkeitsspektroskopie im Nahen Infraroten basiert auf der Zerlegung der Strahlung mit Interferenzfiltern. Für die Multikomponenten-Spektroskopie ist aus der Zeitschrift "Automatisierungstechnische Praxis atp", 32 (1990), Seiten 338-342, eine Anordnung bekannt, bei der maximal 14 verschiedene Interferenzfilter, die auf Blendenrädern angeordnet sind, in den Strahlengang geschwenkt werden können.

Auch hier ist nachteilig, daß zur Spektrenaufnahme mechanisch bewegte Teile eingesetzt werden. Ein weiterer Nachteil ist, daß das gesamte Spektrum nicht lückenlos zur Verfügung steht. Die marktverfügbaren Prozeßspektrometer dieses Typs sind ebenfalls der Preiskategorie "High-Performance" zuzurechnen. Für ein einfaches, robustes und preiswertes Spektrometer, das in rauher industrieller Umgebung betrieben werden soll, kommt das beschriebene Verfahren nicht in Betracht.

Eine weitere Anordnung zur Aufnahme von Spektren ist in der europäischen Patentanmeldung EP OS 0 180 449 beschrieben. Die Dispersion des Lichts erfolgt hier mit Hilfe eines optoakustischen Kristalls. Das dispergierte Licht wird anschließend auf einem Photodetektor-Array abgebildet. Die Anordnung verwendet zwar keine bewegten Teile, hat aber den Nachteil, daß die Herstellung des optoakustischen Kristalls relativ aufwendig und kostenintensiv ist. Hinzu kommt bei Anwendungen im infraroten Spektralbereich, daß die Detektor-Arrays sehr kostspielig sind. Als einfaches und preiswertes Prozeßspektrometer kommt die beschriebene Anordnung daher nicht in Frage.

Ebenfalls mit einem Detektor-Array arbeitet das in der Offenlegungsschrift DE OS 35 25 490 beschriebene Multikomponenten-Prozeßanalysensystem. Die Dispersion des Lichts erfolgt in diesem Fall zwar mit einer einfachen dispergierenden Optik, für das Detektor-Array gelten jedoch die eben genannten Nachteile.

Eine weitere Möglichkeit zur Flüssigkeitsanalyse im Nahen Infraroten ist das Fourier-Transform-Infrared-Verfahren.

In der Offenlegungsschrift DE OS 35 42 161 ist ein Zweistrahl-Interferometer vom Michelson-Typ beschrieben, bei dem mit Hilfe eines bewegten Spiegels das Interferogramm einer unbekannten zu analysierenden Meßstrahlung erzeugt und im Detektor in ein elektrisches Signal umgewandelt wird. Durch anschließende Fouriertransformation erhält man das Strahlungsspektrum.

Die beschriebene Vorrichtung hat den Nachteil, daß zur Erzeugung des Interferogramms ein relativ aufwendiger, Präzisions- Spiegelantrieb benötigt wird. Als einfaches, robustes und preiswertes Spektrometer für Prozeßanwendungen kommt das beschriebene Interferometer deshalb nicht in Betracht.

In der US-Patentschrift 4 525 067 ist ein Verfahren und ein nach diesem Verfahren arbeitendes Fabry-Perot-Spektrometer für die hochauflösende Spektroskopie von Linienstrahlern beschrieben. Dieses Verfahren verwendet eine Doppel-Fabry-Perot-Anordnung. Die optische Schichtdicke des ersten Fabry-Perot-Filters wird auf einen festen Wert eingestellt, während die optische Schichtdicke des zweiten Fabry-Perot-Filters um einen Betrag der optischen Schichtdicke des ersten Fabry-Perot-Filters moduliert wird, der gleich einem Viertel der Wellenlänge ist.

Es gelingt damit, die zu untersuchende Strahlungslinie zwischen einem Maximal- und einem Minimalwert zu modulieren, wobei sich eine Verbesserung des Produkts aus Lichtstärke und Auflösung ergibt.

Das beschriebene Verfahren hat den Nachteil, daß es nur für die hochauflösende Spektroskopie einzelner Strahlungslinien in einem eng begrenzten Spektralbereich geeignet ist, nicht jedoch für die Aufnahme von ganzen Flüssigkeitsspektren in einem vergleichsweise breiten Spektralbereich.

Der vorliegenden Erfindung liegt die Aufgabe zugrunde, ein Verfahren zur Fabry-Perot-Spektroskopie mit einem kompakten Spektrometer zu schaffen, das es ermöglicht, Flüssigkeits-Spektren oder die Spektren gasförmiger Stoffe für Prozeßanwendungen, insbesondere im infraroten Spektralbereich, aufzunehmen. Das Spektrometer soll ohne aufwendige mechanische Stelleinrichtungen für die Optik auskommen.

Die Lösung der Aufgabe gelingt mit den im kennzeichnenden Teils des Anspruchs angegebenen Verfahrensschritten.

Das vorgeschlagene Verfahren geht von der Überlegung aus, daß für die Flüssigkeitsanalyse im Nahen Infraroten Strahlungsbereich (ca. 1»m bis 3»m) nur eine relativ geringe spektrale Auflösung notwendig ist. In diesem Spektralbereich liegen die Oberton- und Kombinations-Schwingungsbanden der Flüssigkeiten, die relativ breitbandig und schwach strukturiert sind.

Es genügt deshalb, die Spektren mit einer Auflösung von etwa 20 bis 40 aufzunehmen. Unter Auflösung ist der Quotient aus der Wellenlänge und der Wellenlängendifferenz zu verstehen, die sich meßtechnisch gerade noch erkennen läßt. Die Auflösungs-Werte 20 bis 40 entsprechen einer Wellenlängen-Differenz von etwa 50nm bis 100 nm (nm = Nanometer). Es genügen bereits relativ wenige Datenpunkte (z.B. 20 Punkte, entsprechend einer Wellenlängen-Differenz von ca. 100 nm), um eine Multikomponenten-Analyse durchzuführen.

Es wird ein interferometrisches Meßverfahren vorgeschlagen, das nicht auf der Zweistrahlinterferenz, sondern auf der Vielstrahlinterferenz basiert. Dies wird erreicht durch eine Fabry-Perot-Filteranordnung, deren Durchlaßcharakteristik ohne mechanisch bewegte Teile abstimmbar ist.

Anhand von FIG.1, FIG.2 und FIG.3 wird der bekannte Aufbau eines Michelson-Interferometers sowie eines Fabry-Perot-Filters erläutert.
Anhand von FIG.4, FIG.5, FIG.6, FIG.7 und FIG.8 wird ein das Verfahren nach der Erfindung nutzende Ausführungsbeispiel erläutert.

Es zeigen
- FIG.1: ein Michelson-Interferometer in schematischer Darstellung,
- FIG.2: ein aus zwei parallelen Spiegeln bestehendes Fabry-Perot-Filter,
- FIG.3: das Transmissionsspektrum eines Filters nach FIG. 2,
- FIG.4: und
- FIG.5: Transmissions-Spektren eines nach dem Verfahren der Erfindung arbeitenden Spektrometers,
- FIG.6: und
- FIG.7: den Strahlungsfluß eines nach dem Verfahren der Erfindung arbeitenden Spektrometers sowie
- FIG.8: ein Ausführungsbeispiel eines nach dem Verfahren der Erfindung arbeitenden Spektrometers mit zwei Fabry-Perot-Filtern.

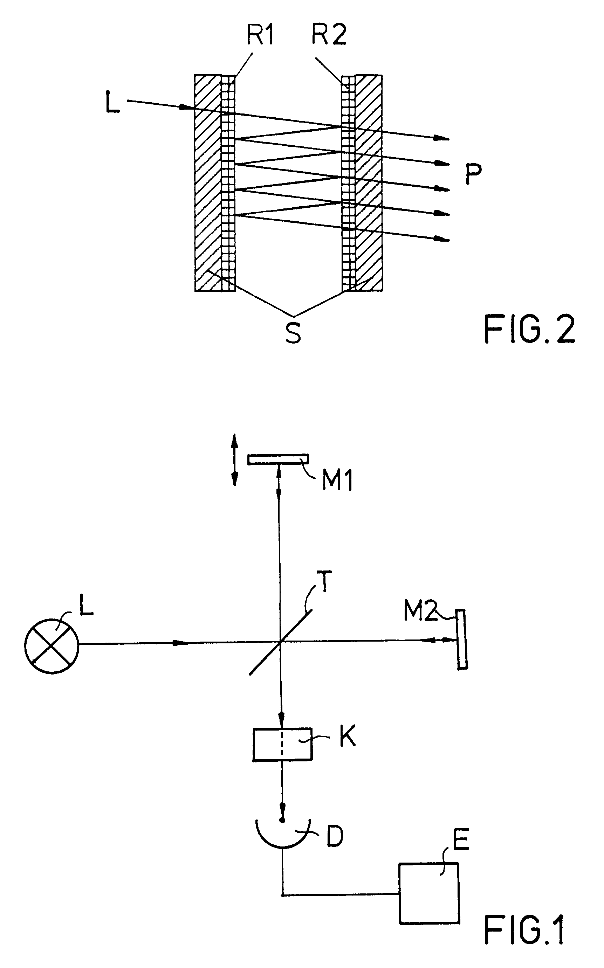

FIG.1 zeigt das Prinzip des Michelson-Interferometers. Die von einer Strahlungsquelle L ausgehende breitbandige Strahlung gelangt zu einem Strahlteiler T, der einen Teil der Strahlung durchläßt und den anderen Teil reflektiert, so daß zwei Interferometerarme entstehen. Jedem Arm ist ein Spiegel M1 bzw. M2 zugeordnet, der das Licht wieder zurück zum Strahlteiler reflektiert. Der Spiegel M2 ist beweglich angeordnet, so daß die Länge des zugehörigen Interferometerarms variabel ist.

Beide Teilstrahlen rekombinieren wieder am Strahlteiler T, wobei ein charakteristisches Interferenzspektrum entsteht. Die rekombinierte Strahlung tritt durch die Küvette K mit dem zu untersuchenden Substanzgemisch und fällt auf den Detektor D, der sie in ein elektrisches Signal umwandelt.

Während des Meßvorgangs wird der Spiegel M2 von einem Punkt, wo beide Interferometerarme gleiche Länge haben, bis zu einem Punkt mit vorgegebener Differenz beider Arme bewegt. Das während der Spiegelbewegung am Detektor aufgenommene Interferogramm wird in einer Auswerteeinrichtung E durch eine Fourier-Transformation in das Strahlungsspektrum umgewandelt. Bei der Längendifferenz Null der Interferometerarme tritt im Interferogramm der sogenannte center burst auf, d.h. alle Wellenlängen werden bei dieser Armstellung maximal verstärkt. Die maximale Längendifferenz zwischen beiden Armen (maximaler Spiegelhub) ist proportional der spektralen Auflösung des Systems.

Das in FIG.2 dargestellte Fabry-Perot-Filter besteht aus zwei planparallelen teildurchlässigen Spiegeln R1 und R2, die auf einem lichtdurchlässigen Substrat S aufgebracht sind und eine Luftschicht einschließen. Jeder von einer Strahlungsquelle L einfallende Strahl wird durch Mehrfachreflexionen an den Spiegelflächen in zahlreiche Parallstrahlen P konstanter Phasendifferenz aufgespalten, die von einem nicht dargestellten optischen Detektor in einer Plattenebene vereinigt die gewünschte Interferenzerscheinung ergeben.

Entsprechend den bekannten Airy-Formeln, die die Intensitätsverteilung der Interferenzen an planparallel begrenzten Schichten angeben, läßt sich die Wellenlänge durch Änderung der optischen Schichtdicke (Produkt aus Spiegelabstand und Brechungsindex des Materials zwischen den Spiegeln) abstimmen.

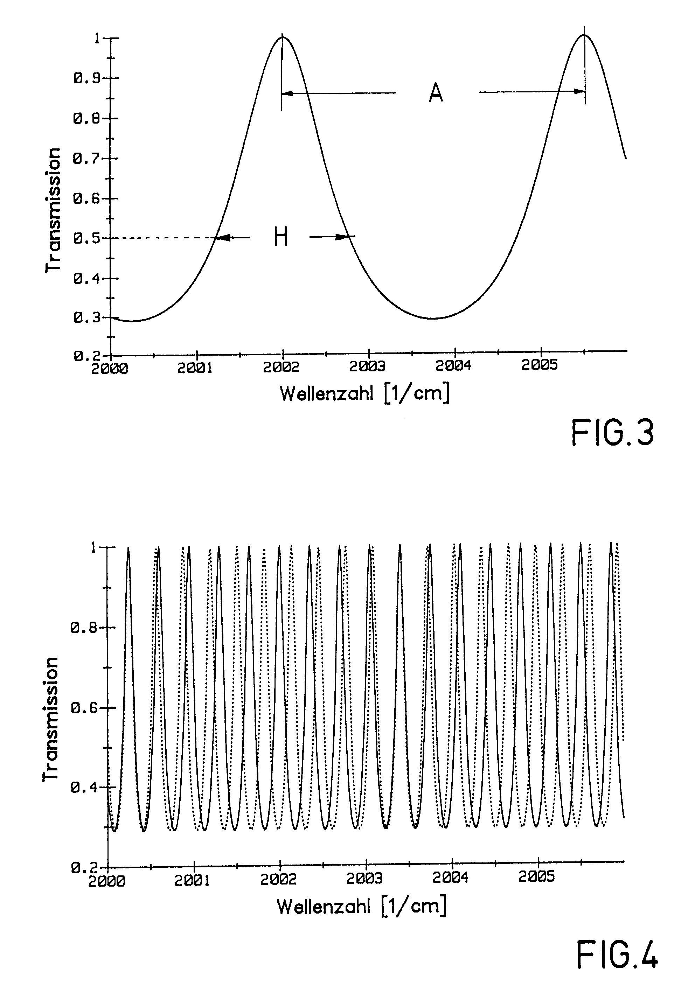

FIG.3 zeigt als Beispiel das Transmissionspektrum eines Fabry-Perot-Filters mit etwa 30% Reflexionsgrad der Spiegel und einer optischen Schichtdicke von ca. 380»m in Abhängigkeit von der Wellenzahl. Den Abstand A zwischen zwei Interferenzmaxima bezeichnet man als freien Spektralbereich. Dieser Abstand ist umgekehrt proportional dem Abstand der beiden Spiegel R1 und R2.

Ein wichtiger Parameter für die spektrale Auflösung eines Fabry-Perot-Filters ist die "Finesse", die als Verhältnis aus dem Abstand A zweier Interferenzmaxima und der Halbwertsbreite - Abstand H in FIG. 3 - eines Interferenzmaximums definiert ist. Die Finesse läßt sich durch den Reflexionsgrad der Spiegel einstellen, wobei ein hoher Reflexionsgrad zu einer hohen Finesse führt.

Die erreichbare spektrale Auflösung des Filters hängt damit vom Reflexionsgrad der beiden Spiegel R1,R2 und von der Schichtdicke ab. Für eine hohe spektrale Auflösung muß der Reflexionsgrad und/oder die optische Schichtdicke groß sein.

Für die Abstimmung ohne mechanisch bewegte Teile kommen elektrooptische, akustooptische, thermooptische und piezoelektrische Methoden in Frage.

Bei der elektrooptischen und akustooptischen Methode wird der Brechungsindex des Materials zwischen den Spiegeln durch den elektrooptischen bzw. akustooptischen Effekt variiert.

Bei der thermooptischen Methode beeinflußt man durch Temperaturänderung sowohl den Spiegelabstand (Dicke des Materials) als auch den Brechungsindex des Materials zwischen den Spiegeln.

Bei der piezoelektrischen Methode wird der Spiegelabstand direkt beeinflußt.

Vergleicht man das Michelson-Interferometer mit einem abstimmbaren Fabry-Perot-Filter, so entspricht die Längendifferenz Null der Interferometerarme des Michelson-Interferometers dem Spiegelabstand Null des Fabry-Perot-Filters. Der Spiegelabstand Null läßt sich jedoch in der Praxis aus prinzipiellen Gründen nicht erreichen.

Die Lösung dieses Problems gelingt im vorgeschlagenen Verfahren durch eine optische Reihenschaltung aus zwei abstimmbaren Fabry-Perot-Filtern, im folgenden als Doppel-FP bezeichnet. Das Transmissionsspektrum eines Doppel-FP stellt eine Superposition der Transmissionsspektren der beiden Einzelfilter dar.

FIG.4 zeigt als Beispiel die Spektren zweier Fabry-Perot-Filter mit der Transmission in Abhängigkeit von der Wellenzahl. Die Dicke des ersten Fabry-Perot-Filters beträgt 4000 »m (durchgezogene Linie) und die Dicke des zweiten 4400 »m (punktierte Linie). Die freien Spektralbereiche der beiden Fabry-Perot-Filter unterscheiden sich demnach um 10%, so daß die Transmissionsspektren der Fabry-Perot-Filter erst nach jeweils 10 Interferenzmaxima wieder in Phase sind.

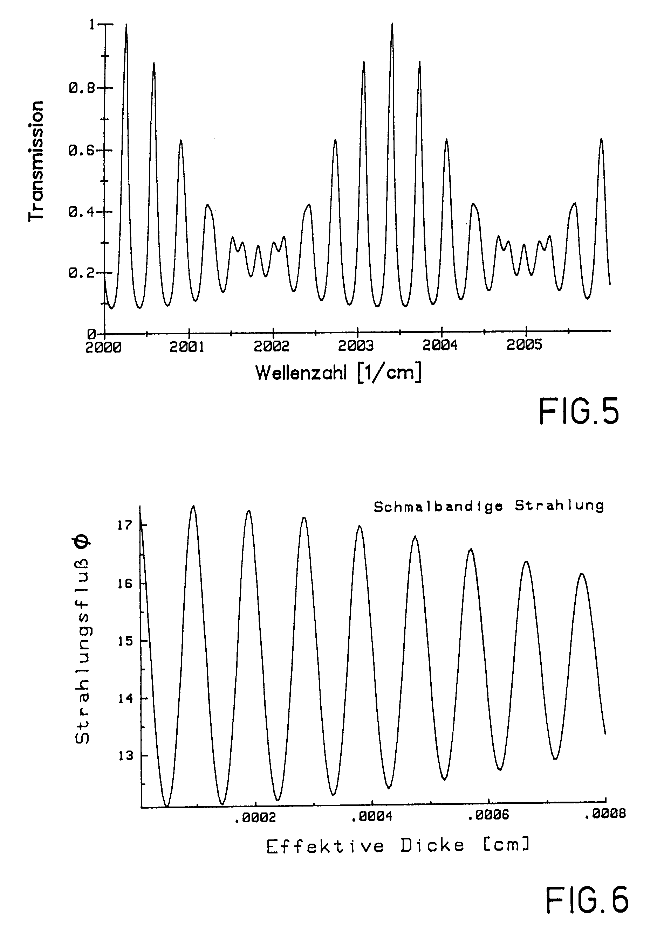

FIG.5 zeigt die Superposition der Transmissionsspektren zweier Fabry-Perot-Filter.

An der entstandenen Hüllkurve ist zu erkennen, daß sich die Reihenschaltung zweier Filter wie ein Fabry-Perot-Filter verhält, dessen freier Spektralbereich 10-mal größer als der ursprüngliche freie Spektralbereich des einzelnen Fabry-Perot-Filters ist. Das Doppel-FP verhält sich also wie ein Fabry-Perot-Filter mit der Dicke 400 »m. Das bedeutet, daß die effektive Dicke des Doppel-FP genau gleich der Schichtdickendifferenz beider Fabry-Perot-Filter ist.

Mit abnehmender Schichtdickendifferenz wird der freie Spektralbereich des Doppel-FP immer größer. Bei der Schichtdickendifferenz Null, die der effektiven Dicke Null des Doppel-FP entspricht, ergibt sich ein unendlich großer freier Spektralbereich. In diesem Fall verschwindet die Hüllkurve, da die Transmissionsspektren beider Fabry-Perot-Filter genau in Phase sind. Das ursprünglich für eine Steigerung der Auflösung vorgeschlagene Doppel-FP stellt somit in überraschender Weise ein Fabry-Perot dar, mit dem sich effektive Schichtdicken zwischen Null und einem gewünschten Wert erzeugen lassen.

Das vorgeschlagene Verfahren nutzt also nicht etwa die Feinstruktur des Doppel-FP mit seiner potentiell hohen Auflösung, sondern vielmehr die entstehende Hüllkurve, die auf Grund der geringen effektiven Schichtdicke einem sehr schlecht auflösenden Fabry-Perot-Filter entspricht.

Wie erläutert wurde, gelingt es, durch ein Doppel-FP die effektive optische Schichtdicke Dicke Null zu erzeugen. Damit steht der Aufnahme eines Interferogramms in Analogie zum Michelson-Interferometer nichts mehr im Wege.

Zur Verdeutlichung wird das Doppel-FP zunächst mit schmalbandiger Strahlung der Wellenlänge λ beaufschlagt und die Durchlaßfunktion des Doppel-FP in Abhängigkeit von der effektiven optischen Schichtdickenänderung mit dem Detektor D registriert. Beide Fabry-Perot-Filter werden nun so abgestimmt, daß sie genau die gleiche optische Schichtdicke haben (effektive Dicke Null des Doppel-FP). Zur Aufnahme der Durchlaßfunktion der Filteranordnung wird die optische Schichtdicke des einen Fabry-Perot-Filters verändert.

FIG.6 zeigt den Verlauf des Strahlungsflusses φ in Abhängigkeit von der effektiven Dicke eines Doppel-FP, der folgendermaßen zu interpretieren ist:

Das erste Maximum des Strahlungsflusses φ ergibt sich bei der Effektivdicke Null. Das erste Minimum entsteht, wenn die Effektivdicke den Wert λ/4*n erreicht, wobei n der Brechungsindex des Materials zwischen den Spiegeln der abstimmbaren Fabry-Perot-Filter ist. Das darauffolgende Maximum ergibt sich bei der Effektivdicke λ/2*n. Hier sind die Interferenzspektren der beiden Fabry-Perot-Filter um genau eine Interferenzordnung gegeneinander verschoben. Das darauffolgende Minimum erhält man bei einer Effektivdicke mit dem Wert 0,75 * λ/n usw. Damit sind die Verhältnisse völlig identisch mit denen im Michelson-Interferometer.

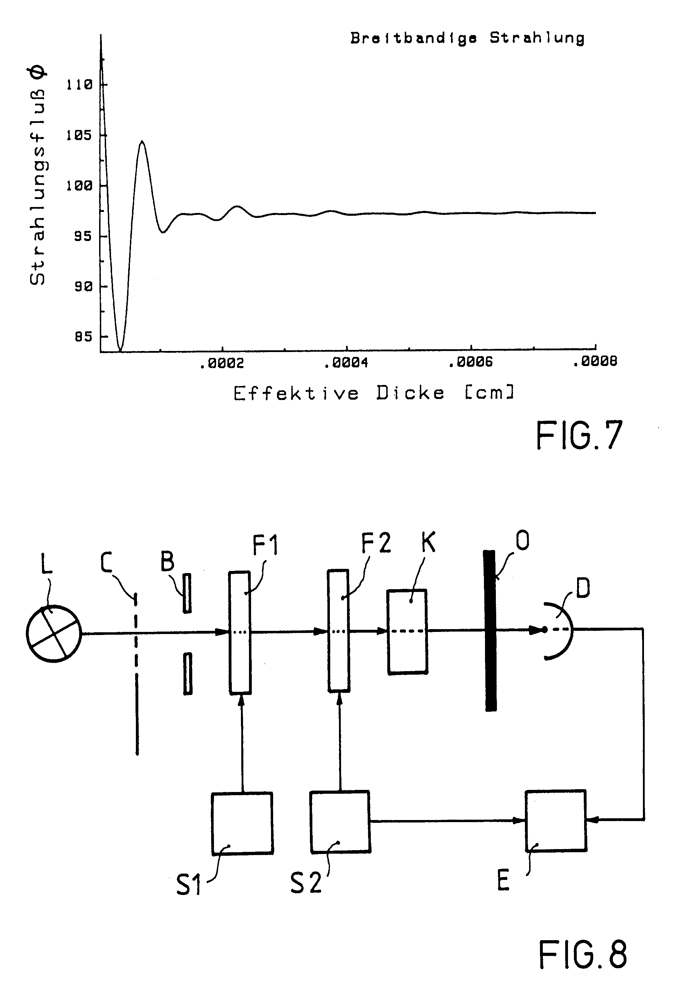

Beaufschlagt man das Doppel-FP mit breitbandiger Strahlung, so erhält man den in FIG.7 gezeigten Verlauf des Strahlungsflusses φ. Auch hier zeigt sich die völlige Analogie zum Michelson-Interferometer.

Bei den abstimmbaren Fabry-Perot-Filtern handelt es sich - wie in den älteren deutschen Patentanmeldungen P 38 12 334.7, p 39 23 831.8 und P 39 25 692.8 (nach dem Prioritätsdatum der vorliegenden Anmeldung veröffentlicht) bereits beschrieben - vorzugsweise um elektrisch bzw. thermisch abstimmbare Fabry-Perot-Filter, deren charakteristisches Interferenzspektrum von der optischen Schichtdicke abhängt. Ein Fabry-Perot-Filter kann je nach Ausführung eine Platte aus elektrooptisch oder thermooptisch aktivem Material oder eine mit doppelbrechenden Flüssigkristallen gefüllte Zelle sein.

Die optische Schichtdicke des ersten Fabry-Perot-Filters wird auf einen festen Wert eingestellt, während die optische Schichtdicke des zweiten Fabry-Perot-Filters elektrisch oder thermisch kontinuierlich in einem vorgegebenen Wertebereich verändert wird. Das gesuchte Strahlungsspektrum ergibt sich durch mathematische Umformung des am Detektor erhaltenen Interferogramms, wobei vorzugsweise eine Fourier-Transformation verwendet wird.

Im folgenden wird anhand der FIG.8 ein Ausführungsbeispiel eines nach dem erfindungsgemäßen Verfahren arbeitendes Spektrometer erläutert.

Das von einer Strahlungsquelle L kommende breitbandige Licht wird von einem Chopper C moduliert und gelangt zu einer Blende B, mit der der interferometrische Auswertebereich auf einen mittleren Bereich der Strahlung in der Nähe der optischen Achse beschränkt werden kann. Es folgt das erste Fabry-Perot-Filter F1, das entweder aus einer elektrooptisch aktiven Platte, einer thermooptisch aktiven Platte oder aus einer mit Flüssigkristallen gefüllten Zelle besteht.

Das Fabry-Perot-Filter F1 wird von der Steuereinheit S1 elektrisch bzw. thermisch auf eine bestimmte optische Schichtdicke eingestellt. Hinter dem Filter F1 ist das Fabry-Perot-Filter F2 angeordnet, dessen optische Schichtdicke von der Steuereinheit S2 elektrisch oder thermisch kontinuierlich verändert wird.

Im Fall der thermooptischen Variante können zur Erfassung der Temperatur z.B. Dünnschichtwiderstände verwendet werden, die sich direkt auf dem Fabry-Perot-Filter befinden.

Im Strahlengang folgt anschließend die Meßstrecke K mit dem zu untersuchenden Substanzgemisch. Die Meßstrecke K kann z.B. eine Küvette sein. Der Meßstrecke nachgeschaltet ist ein Objektiv O.

Die Strahlung wird schließlich vom Detektor D erfaßt und in ein elektrisches Signal umgesetzt. Mit Hilfe einer Auswerteeinrichtung E erfolgt die Signalauswertung (Fouriertransformation) und die Berechnung der Konzentration einzelner Komponenten des Substanzgemisches.

## Patentansprüche

1. Verfahren zur Fabry-Perot-Spektroskopie mit einem Spektrometer,
- in dessen Strahlengang sich eine Strahlungsquelle, zwei nacheinander durchstrahlte Fabry-Perot-Interferenzfilter, ein zu untersuchendes Substanzgemisch sowie ein Detektor zur Aufnahme des empfangenen Strahlungsflusses befinden,
- bei dem die beiden Fabry-Perot-Interferenzfilter auf die gleiche optische Schichtdicke eingestellt werden und
- bei dem die optische Schichtdicke des zweiten Fabry-Perot-Interferenzfilters durch Modulation kontinuierlich geändert wird,
dadurch gekennzeichnet, daß
- zur Erzeugung eines Interferogrammes der Hüllkurvenanteil der Transmissionskurven genutzt wird, die durch Überlagerung (Superposition) der Airy-Funktionen der beiden Fabry-Perot-Interferenzfilter entsteht, wobei der Hüllkurvenanteil die Differenz der optischen Schichtdicken der beiden Fabry-Perot-Interferenzfilter repräsentiert,
- der Strahlungsfluß am Detektor breitbandig empfangen wird, um den Hüllkurvenanteil der Transmissionskurven nutzbar zu machen und
- das am Detektor empfangene Interferogramm durch mathematische Umformung in ein Spektrum als Funktion der Wellenzahl umgewandelt wird.

## Claims

1. A process for Fabry-Perot spectroscopy with a spectrometer,
- in the beam path of which there is a radiation source, two Fabry-Perot interference filters through which the radiation passes successively, a substance mixture which is to be investigated and a detector for picking up the received radiation flux,
- in which the two Fabry-Perot interference filters are set to the same optical layer thickness and
- in which the optical layer thickness of the second Fabry-Perot interference filter is continuously modified by modulation,
characterised in that
- the envelope curve portion of the transmission curves is utilised in order to produce an interferogram, which is produced by superposition of the Airy functions of the two Fabry-Perot interference filters, the envelope curve portion representing the difference between the optical layer thicknesses of the two Fabry-Perot interference filters,
- the radiation flux is received in a wide band at the detector, in order to make the envelope curve portion of the transmission curves usable, and
- the interferogram received at the detector is converted by mathematical transformation into a spectrum as a function of the wave number.

## Revendications

1. Procédé de spectroscopie Pérot-Fabry avec un spectromètre,
- dans la marche des rayons duquel se trouvent une source de rayonnement, deux filtres d'interférence de Pérot-Fabry illuminés l'un après l'autre, un mélange de matière à analyser, ainsi qu'un détecteur pour capter le flux de rayonnement reçu,
- dans lequel les deux filtres d'interférence de Pérot-Fabry sont réglés sur la même épaisseur de couche optique, et
- dans lequel l'épaisseur de couche optique du second filtre d'interférence de Pérot-Fabry est modifiée continuellement par modulation,
caractérisé en ce que
- pour former un interférogramme, on utilise la partie enveloppante des courbes de transmission, qui est créée par superposition des fonctions d'Airy des deux filtres d'interférence de Pérot-Fabry, la partie enveloppante représentant la différence des épaisseurs de couche optiques des deux filtres d'interférence de Pérot-Fabry,
- le flux de rayonnement est capté par le détecteur sur une large bande, afin de rendre utilisable la partie enveloppante des courbes de transmission, et
- l'interférogramme capté sur le détecteur est transformé par transformation mathématique dans un spectre comme fonction du nombre d'onde.
